# EUROPEAN PATENT SPECIFICATION

(11) **EP 2 604 376 B1**
(45) Date of publication and mention of the grant of the patent: **20.04.2016**
(21) Application number: 12196676.6
(22) Date of filing: 12.12.2012
(51) Int. Cl.: B23K 26/08, B23K 26/34

(54) **Overlay welding method and overlay welding apparatus**
Auftragschweißverfahren und Auftragschweißvorrichtung
Procédé de soudage par métal d'apport et appareil de soudage pour le soudage par métal d'apport

(30) Priority: 16.12.2011 JP 2011276265
(43) Date of publication of application: 19.06.2013
(73) Proprietor: MITSUBISHI HEAVY INDUSTRIES, LTD., Tokyo 108-8215 (JP)
(72) Inventor: Tsubota, Shuho, Tokyo, 108-8215 (JP); Tsuruta, Yohei, Tokyo, 108-8215 (JP)
(74) Representative: Hoffmann Eitle

(56) References cited:
- EP-A1- 1 844 894
- EP-A1- 2 228 462
- JP-A- H0 191 987
- JP-A- 2005 349 403
- US-A- 3 449 816
- US-A1- 2002 164 436
- US-A1- 2006 231 535
- US-A1- 2009 269 206
- US-A1- 2011 024 393
- US-B1- 6 274 839

## Description

The present invention relates to an overlay welding method and an overlay welding apparatus for performing overlay welding on a surface of a base material. Background

As for a component requiring abrasion resistance, a material having a high hardness with respect to a base material of the component is subjected to overlay welding. The hardness of the overlay-welded portion is affected by dilution of a filler material due to a base material melted by welding. Specifically, if dilution is small, the hardness becomes high, and if dilution is large, the hardness becomes low. A diluted amount generally exhibits an increasing tendency if a welding heat input is high. Therefore, in the overlay welding, the welding heat input to the base material needs to be taken into consideration. Furthermore, when heat is input to the filler material continuously, even if dilution with the base material is small, crystal grains grow largely and a required hardness may not be secured. Accordingly, the welding heat input to the filler material also needs to be taken into consideration in the overlay welding. Further, in the overlay welding, defects related to a welding procedure (porosity, blowholes, cracks due to an expansion difference between the base material and the filler material, and the like) need to be prevented. Occurrence of such defects has a high correlation with a parameter such as the welding heat input. Attainment of compatibility between a procedure for securing a required hardness of the overlaid portion and a procedure for preventing welding defects may be difficult according to the shape of a target component, which is a base material. Particularly, an operation to perform the overlay welding on an inner surface of a hole having a relatively small diameter has a high degree of difficulty, and a stable working method has been demanded.

Conventionally, for example, a metal overlaying method for an inner surface of a cylinder described in Patent Literature 1 is a method of performing overlay welding on the inner surface by irradiating a laser beam having a high-energy density thereon simultaneously with spraying metal powder by inert gas. In this method, the laser beam is irradiated on a portion corresponding to a portion to be overlaid on the inner surface of the cylinder.

In addition, EP 2 228 462 A1 discloses a method of applying a coating to a seat surface of a workpiece, wherein the seat surface is provided within a bore in the workpiece at a predefined spacing from an input opening of the bore and a smaller diameter of the bore amounts to at most 50% of the spacing in a region between the input opening and the seat surface characterized in that a coating material is applied to the seat surface in a prior method and the coating is formed at the seat surface in a further method step by means of a beam of energy in that the beam of energy is directed at the seat surface through the bore, wherein a laser beam or a beam of electrons is used as a beam of energy.

EP 1 844 894 A1 discloses a method of repair welding an object made from at least one cast material, in particular cast iron, wherein at least one at least partially defective area, in particular at least one damaged part or at least one defect, for example a faulty bore and/or at least a faulty threading-comprising surface of the object is removed, and the removed area is at least partially replaced with a replacement material different from the cast material of the object.

Moreover, US 3,449,816 A discloses a method of repairing defective areas normally found about a threaded opening in cylinder heads, comprising the steps: removing the defective material about said opening to form an enlarged opening, partially inserting a cup-shaped member into one end of said enlarged opening and securing same therein with the open portion facing inwardly, filling said cup-shaped member and said enlarged opening with welding material, machining the outer portions of said welding material and said cup-shaped member thereby removing the entire bottom of said cup-shaped member, and drilling and taping said welding material to form a threaded opening substantially identical in size to the first mentioned opening.

### Citation List

### Patent Literature

Patent Literature 1: Japanese Laid-open Patent Publication No. 1-91987

US 2011/0024393 A1 describes a process for closing an opening in a surface of a component. The process entails forming a channel in the component surface so that the channel at least partially surrounds an opening at the component surface. An alloy is then deposited in the channel. A step is then machined that intersects the opening and is at least partially formed in the deposit. The step defines a recess that is at least partially surrounded by a peripheral portion of the deposit and has a surface recessed into the component surface. A cap is placed in the recess and welded to the peripheral portion of the deposit to define a weld joint that closes the opening. The surface of the weld joint is then machined to form a machined surface that is substantially flush with the component surface.

JP 2005-349403 A describes a laser-beam build-up method. A copper alloy powder, which is supplied to a seat face of a cylinder head, is irradiated with a laser beam, and simultaneously a shielding gas is discharged to the face. The shielding gas is a mixture of argon and helium that is added to the total of argon at a ratio of 0.1-10 vol%. In this case, a molten pool, which his produced due to melting of the copper alloy powder, is widely covered with a plasma cloud and consequently the temperature rise of the molten pool is accelerated. A built-up part that is formed by cooling and solidifying the molten pool functions as a valve seat.

### Summary

### Technical Problem

In Patent Literature 1 mentioned above, because a laser beam is irradiated on the portion corresponding to the overlaid portion, as described above, the welding heat input to the base material increases. Therefore, if dilution is large, the hardness may decrease.

At present, when overlay welding is performed on an inner surface of a hole having a relatively small diameter, the degree of difficulty is high and automation is difficult. Accordingly, in many cases, overlay welding is performed by manual TIG welding performed by a worker such as a professional welder. In such a manual procedure, the quality may vary depending on the caliber of the worker, and the quality may vary even by the same worker.

The present invention has been achieved to solve the above problems, and an object of the present invention is to provide an overlay welding method and an overlay welding apparatus enabling to facilitate overlay welding, while securing a certain hardness of an overlaid portion and preventing welding defects.

### Solution to Problem

The present invention is solved by an overlay method according to the combination of features of claim 1. Preferred embodiments are addressed by the dependent claims. The present invention is further solved by the combination of features of claim 12. Preferred embodiments are addressed by the dependent claims.

According to an aspect of the present invention, an overlay welding method for performing overlay welding on a surface to be overlaid of a base material, includes: a preparing step of forming a bottomed depression, with the surface to be overlaid being a circumferential surface thereof; and an overlaying step at which a filler material is fed toward a bottom face of the depression, and a laser beam as a heat source is irradiated on the bottom face of the depression to which the filler material is fed, thereby forming an overlaid portion reaching the surface to be overlaid, while filling the bottom face of the depression with the melted filler material. The overlay welding method further includes a machining step at which a through hole is formed in the base material along a center line of the depression after the overlaying step.

According to the overlay welding method, because the melted filler material comes in contact with the surface to be overlaid, the surface to be overlaid melts due to heat of the filler material. That is, heat of the laser beam is not directly applied to the surface to be overlaid, and the heat of the melted filler material is indirectly applied thereto. Therefore, a heat input to the base material is suppressed, thereby enabling to suppress melting of the base material to the minimum. As a result, dilution of the base material into the melted filler material can be reduced, thereby enabling to increase the hardness of the overlaid portion. Furthermore, because the heat input to the base material can be suppressed, welding defects (porosity, blowholes, cracks due to an expansion difference between the base material and the filler material, and the like) can be prevented. Further, it is not so difficult to fill the bottom face of the depression with the melted filler material, and overlay welding can be easily performed. In addition, when overlay welding is performed spirally along a position of the surface to be overlaid, a dent is likely to be formed at the center, and cracks centering from the dent are easily generated. However, as in the overlay welding method according to the present invention, if overlay welding is performed so as to fill the bottom face of the depression, the overlaid portion is formed in a layered manner, and thus a dent is not formed and generation of cracks can be prevented. According to the overlay welding method, an overlaid portion can be formed on an inner circumferential surface of an opening of the through hole formed in the base material, or on an inner circumferential surface of the through hole formed in the base material.

Advantageously, in the overlay welding method, a new overlaid portion is further layered on the formed overlaid portion at the overlaying step.

When heat is input to the filler material continuously, even if dilution with the base material is small, crystal grains grow largely and a required hardness may not be secured. According to the overlay welding method of the present invention, by layering the overlaid portion intermittently, grain coarsening can be prevented and the required hardness can be secured.

Advantageously, in the overlay welding method, the filler material is heated and fed at the overlaying step.

According to the overlay welding method, because the filler material easily melts, an output of the laser beam can be decreased, and the heat input to the base material can be further suppressed.

Advantageously, in the overlay welding method, at the overlaying step, the base material is preheated before forming the overlaid portion, and the base material is post-heated after the overlaid portion is formed.

Tensile stress associated with restraint to the overlaid portion is large depending on the shape of the base material, and cracks may be generated in the overlaid portion. According to the overlay welding method of the present invention, by using a preheating process and a post-heating process simultaneously, the tensile stress associated with restraint to the overlaid portion by the base material is suppressed, thereby enabling to prevent generation of cracks in the overlaid portion.

Advantageously, in the overlay welding method, at the overlaying step, feeding of the filler material and irradiation of a laser beam for melting the filler material are performed for plural times.

According to the overlay welding method, efficiency of the overlay welding can be improved.

Advantageously, in the overlay welding method, at the preparing step, a corner connecting the circumferential surface of the depression and the bottom face of the depression is formed in a circular arc shape.

According to the overlay welding method, because the flow of the melted filler material is facilitated at the corner, incomplete fusion between the base material and the filler material can be prevented.

Advantageously, in the overlay welding method, at the preparing step, the bottom face of the depression is formed in a flat shape or a concave shape having a large angle of aperture.

According to the overlay welding method, because the filler material at the melted portion is planarized by the bottom face of the depression, weld penetration of the filler material into the base material can be stabilized.

Advantageously, the overlay welding method further includes: a re-preparing step of forming a new depression reaching the bottom face of the depression in the base material after the overlaying step; and a re-overlaying step of performing overlay welding to the new depression similarly to the overlaying step.

According to the overlay welding method, when the base material is thick (when the depression is deep), overlay welding can be performed easily by reducing the depth of the depression.

According to a preferred embodiment, the machining step includes forming the through hole along a center line of the depression after the re-overlaying step instead of the overlaying step.

According to the overlay welding method, an overlaid portion can be formed on an inner circumferential surface of an opening of the through hole formed in the base material, or on an inner circumferential surface of the through hole formed in the base material.

Advantageously, in the overlay welding method, at the preparing step, the bottom face of the depression is formed by blocking one opening of the through hole by a blocking member formed of a same material as that of the filler material or a same material as that of the base material, while designating a circumferential surface of the through hole formed in the base material itself as the surface to be overlaid.

According to the overlay welding method, the depression does not need to be formed from opposite sides, and can be formed by one-side machining, thereby enabling to improve efficiency. Furthermore, because position adjustment of respective depressions does not need to be performed, positional accuracy in machining of the base material can be improved. By forming the blocking member by the same material as that of the filler material, a certain hardness of the overlaid portion in a first layer (a first pass) formed on the bottom face can be secured. Meanwhile, by forming the blocking member by the same material as that of the base material, manufacturing costs of the blocking member can be reduced and material procurement efficiency can be improved, as compared to a case of forming a blocking member by the same material as that of the filler material.

Advantageously, in the overlay welding method, at the overlaying step, feeding of the filler material and irradiation of the laser beam are performed so as to be away from the center line of the depression, a feeding position of the filler material and an irradiation position of the laser beam are moved upward so as to be away from the bottom face of the depression, and the base material is rotated around the center line of the depression to form the overlaid portion.

According to the overlay welding method, overlay welding in which the melted filler material is brought into contact with the surface to be overlaid to melt the surface to be overlaid by the heat of the filler material can be performed with excellent repeatability, and automation becomes possible.

According to another aspect of the present invention, an overlay method includes: a preparing step of forming a bottomed depression, with the surface to be overlaid being a circumferential surface thereof; and an overlaying step at which a filler material is fed toward a bottom face of the depression, and a laser beam as a heat source is irradiated on the bottom face of the depression to which the filler material is fed, thereby forming an overlaid portion reaching the surface to be overlaid, while filling the bottom face of the depression with the melted filler material, wherein at the preparing step, a bottomed annular groove formed in the base material itself is designated as the depression, with an outer circumferential surface thereof being the surface to be overlaid, and a machining step at which, after the overlaying step, the inner peripheral side of the annular groove is cut to form a through hole penetrating the base material.

According to the overlay welding method, a certain hardness of the overlaid portion is secured and overlay welding can be performed easily, while preventing welding defects, even by the overlay welding method. The overlaid portion can be formed on an inner circumferential surface of the opening of the through hole formed in the base material.

Advantageously, in the overlay welding method, a circumferential surface on an inner periphery side of the depression formed of the annular groove is a tapered surface with a groove width being gradually narrowed toward a bottom face.

According to the overlay welding method, the melted filler material is likely to flow toward a circumferential surface on an outer periphery side of the depression, which is the surface to be overlaid, by the tapered surface. Therefore, incomplete fusion between the base material and the filler material can be prevented. Furthermore, welding can be further facilitated, because an opening side of the depression, which becomes a groove for welding, is widened by the tapered surface.

Advantageously, in the overlay welding method, at the preparing step, a stepped portion is provided by cutting a circumferential surface of an opening in a through hole formed in the base material itself, a circumferential surface of the stepped portion is designated as the surface to be overlaid, and an insertion member formed of a same material as that of the filler material or a same material as that of the base material and having an outer circumferential surface abutting on the circumferential surface of the through hole is inserted into the through hole, thereby forming the depression, which is an annular groove by the stepped portion and the insertion member.

According to the overlay welding method, the overlaid portion can be formed on the inner circumferential surface of the opening of the through hole formed in the base material. By forming the insertion member by the same material as that of the filler material, a certain hardness of the overlaid portion can be secured. Meanwhile, by forming the insertion member by the same material as that of the base material, manufacturing costs of the insertion member can be reduced and material procurement efficiency can be improved, as compared to a case of forming an insertion member by the same material as that of the filler material.

Advantageously, in the overlay welding method, the insertion member is formed in a divided manner.

According to the overlay welding method, the depression can be formed for only one layer (one pass) of the overlaid portion by the divided insertion member. Accordingly, overlay welding does not need to be performed with respect to a narrow groove, thereby enabling to improve accessibility for feeding the filler material to the bottom face of the depression and irradiating a laser beam.

Advantageously, in the overlay welding method, the insertion member is cooled.

According to the overlay welding method, because the cooled insertion member can be separated from the overlaid portion, the insertion member can be used repeatedly for overlay welding. Furthermore, because the cooled insertion member also cools the melted filler material, the heat input to the surface to be overlaid can be suppressed, and the overlaid portion having a high hardness can be acquired.

Advantageously, in the overlay welding method, at the preparing step, the depression is formed as a circular annular groove, and at the overlaying step, feeding of the filler material and irradiation of the laser beam are performed toward the bottom face of the depression, a feeding position of the filler material and an irradiation position of the laser beam are moved upward so as to be away from the bottom face of the depression, and the base material is rotated around a center line of the circular annular groove in the depression to form the overlaid portion.

According to the overlay welding method, overlay welding in which the melted filler material F is brought into contact with the surface P to be overlaid to melt the surface P to be overlaid by the heat of the filler material F can be performed with excellent repeatability, and automation becomes possible.

An overlay apparatus which can be used to perform an embodiment of the overlay method according to the present invention includes a bottomed depression provided to a base material and performs overlay welding, while designating the circumferential surface of the depression as a surface to be overlaid, include: a filler material feeder that feeds a filler material; a beam irradiation unit that irradiates a laser beam, which becomes a heat source for melting the filler material; a shielding gas feeder that feeds shielding gas to an atmosphere in which a filler material is melted by a laser beam; a rotation unit that rotates the base material around a center line of the depression; and a moving unit that supports the filler material feeder and the beam irradiation unit so that a feeding position of a filler material fed by the filler material feeder and an irradiation position of a laser beam irradiated by the beam irradiation unit reach a bottom face of the depression, while being away from the center line of the depression, and moves the feeding position of the filler material and the irradiation position of the laser beam along the center line of the depression.

According to the overlay welding apparatus, an overlaying step can be performed such that feeding of the filler material and irradiation of the laser beam are performed to the bottom face of the depression so as to be away from a center line S of the depression, the feeding position of the filler material and the irradiation position of the laser beam are moved upward so as to be away from the bottom face of the depression, and the base material is rotated around the center line of the depression, to form the overlaid portion. Therefore, dilution of the base material into the melted filler material can be reduced, thereby enabling to increase the hardness of the overlaid portion. Furthermore, because the heat input to the base material can be suppressed, welding defects (porosity, blowholes, cracks due to an expansion difference between the base material and the filler material, and the like) can be prevented. Furthermore, it is not so difficult to fill the bottom face of the depression with the melted filler material, and overlay welding can be easily performed to enable automation.

Another overlay welding apparatus includes a depression formed of a circular annular groove provided to a base material and performs overlay welding, designating the depression as a groove for welding, includes: a filler material feeder that feeds a filler material; a beam irradiation unit that irradiates a laser beam, which becomes a heat source for melting the filler material; a shielding gas feeder that feeds shielding gas to an atmosphere in which a filler material is melted by a laser beam; a rotation unit that rotates the base material around a center line of a circular annular groove in the depression; and a moving unit that supports the filler material feeder and the beam irradiation unit so that a feeding position of a filler material fed by the filler material feeder and an irradiation position of a laser beam irradiated by the beam irradiation unit reach a bottom face of the depression, and moves the feeding position of the filler material and the irradiation position of the laser beam around the center line of the circular annular groove in the depression.

According to the overlay welding apparatus, an overlaying step can be performed such that feeding of the filler material and irradiation of the laser beam are performed to the bottom face of the depression, the feeding position of the filler material and the irradiation position of the laser beam are moved upward so as to be away from the bottom face of the depression, and the base material is rotated about the center line of the circular annular groove in the depression, to form the overlaid portion. Therefore, dilution of the base material into the melted filler material can be reduced, thereby enabling to increase the hardness of the overlaid portion. Furthermore, because the heat input to the base material can be suppressed, welding defects (porosity, blowholes, cracks due to an expansion difference between the base material and the filler material, and the like) can be prevented. Furthermore, it is not so difficult to fill the bottom face of the depression with the melted filler material, and overlay welding can be easily performed to enable automation.

### Advantageous Effects of Invention

According to the present invention, overlay welding can be facilitated while securing a certain hardness of an overlaid portion and preventing welding defects.

### Brief Description of Drawings

FIG. 1 is a schematic diagram of an overlay welding apparatus which can be used to perform the overlay welding method according to a first embodiment of the present invention.
FIG. 2 is a plan view of a base material subjected to overlay welding.
FIG. 3 are process diagrams of an overlay welding method according to the first embodiment of the present invention.
FIG. 4 are process diagrams of the overlay welding method according to the first embodiment of the present invention.
FIG. 5 are process diagrams of another overlay welding method according to the first embodiment of the present invention.
FIG. 6 is a schematic diagram of an overlay welding apparatus which can be used to perform the overlay welding method according to a second embodiment of the present invention.
FIG. 7 is a plan view of a base material subjected to overlay welding.
FIG. 8 are process diagrams of an overlay welding method according to the second embodiment of the present invention.
FIG. 9 are process diagrams of another overlay welding method according to the second embodiment of the present invention.
FIG. 10 are process diagrams of another overlay welding method according to the second embodiment of the present invention.
FIG. 11 are process diagrams of another overlay welding method according to the second embodiment of the present invention.
FIG. 12 are process diagrams of another overlay welding method according to the second embodiment of the present invention.

### Description of Embodiments

Exemplary embodiments of the present invention will be explained below in detail with reference to the accompanying drawings. The present invention is not limited to the embodiments. In addition, constituent elements in the following embodiments include those that can be replaced by persons skilled in the art, or that are substantially equivalent.

### [First embodiment]

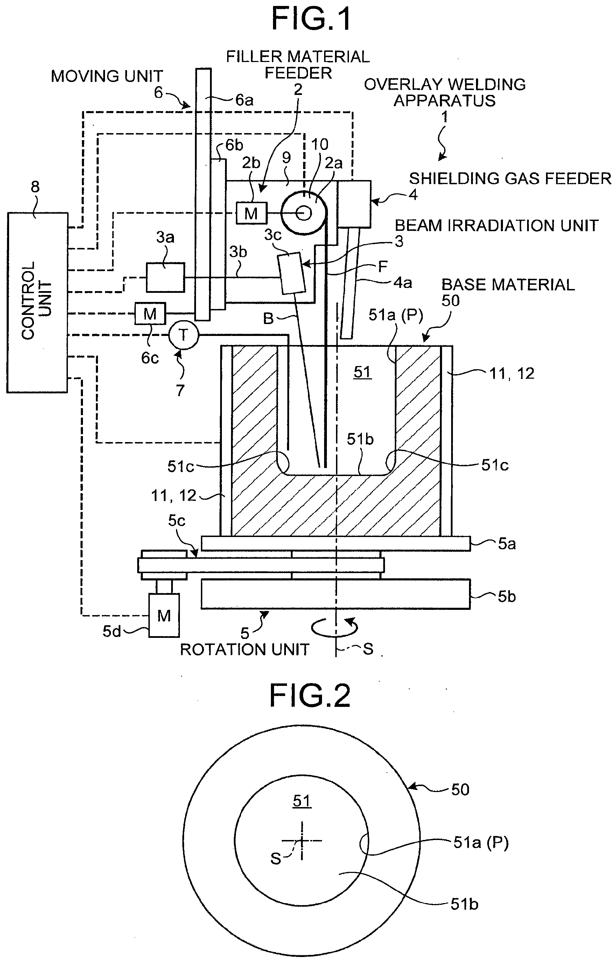

FIG. 1 is a schematic diagram of an overlay welding apparatus which can be used to perform the overlay welding method according to an embodiment of the present invention, and FIG. 2 is a plan view of a base material subjected to overlay welding.

As shown in FIGS. 1 and 2, in an overlay welding apparatus 1 which can be used to perform the overlay welding method according to the present embodiment, a bottomed depression 51 having a circular circumferential surface 51a is provided to a base material 50, to perform overlay welding on a surface P to be overlaid, designating the circumferential surface 51a of the depression 51 in the base material 50 as the surface P to be overlaid. The base material 50 is made of stainless steel (for example, SUS 304).

As shown in FIG. 1, the overlay welding apparatus 1 includes a filler material feeder 2, a beam irradiation unit 3, a shielding gas feeder 4, a rotation unit 5, a moving unit 6, a temperature measurement unit 7, and a control unit 8.

The filler material feeder 2 feeds a filler material F. In the present embodiment, the filler material feeder 2 includes a roller 2a that winds the filler material F in a wire form, and a motor 2b that rotates the roller 2a to feed the filler material F. The roller 2a and the motor 2b are provided on a frame 9. The filler material F is made of a material harder than that of the base material 50, and cobalt-base alloy is used, for example. Although not shown in the drawings, the filler material feeder 2 can be a feeder that feeds powdered filler material, and in this case, includes a hopper that feeds powdered filler material in a fixed quantity, and a motor that drives the hopper. The filler material feeder 2 includes a heating unit 10 that heats the filler material F. The heating unit 10 does not input heat, which is as high as that of melting the filler material F, and is provided in the roller 2a or a hopper (not shown), for example.

The beam irradiation unit 3 irradiates a laser beam B, which becomes a heat source that melts the filler material F. In the present embodiment, the beam irradiation unit 3 includes a laser generation source 3a that generates the laser beam B, feeds the generated laser beam B through an optical fiber 3b, and emits the laser beam B by an emitter 3c. The emitter 3c is provided to the frame 9. The configuration of the beam irradiation unit 3 is not limited to the configuration of feeding the laser beam B through the optical fiber 3b. For example, although not shown in the drawings, the beam irradiation unit 3 can have a configuration of transmitting the generated laser beam B by a mirror, or a configuration of directly emitting the laser beam B generated by the laser generation source 3a.

The shielding gas feeder 4 feeds shielding gas through a feed pipe 4a to an atmosphere in which the filler material F is melted by the laser beam B.

The rotation unit 5 rotates the base material 50 around a center line S of the depression 51. In the present embodiment, the rotation unit 5 includes an arrangement member 5a that arranges the base material 50 in a state with an opening of the depression 51 facing upward, a rotation support member 5b that rotatably supports the arrangement member 5a, a rotation mechanism 5c that rotates the rotation support member 5b, and a motor 5d as a drive source of the rotation mechanism 5c. For example, the rotation mechanism 5c includes a roller attached to the rotation support member 5b, with a rotation center thereof matched with the center line S of the depression 51 in the base material 50 arranged on the arrangement member 5a, a roller attached to an output shaft of the motor 5d, and an annular belt spanned over the respective rollers. Although not shown in the drawings, the rotation unit 5 can be provided such that the depression 51 and the respective feeding positions relatively rotate and move around the center line S of the depression 51, and can be formed to rotate the frame 9 fitted with the filler material feeder 2 and the beam irradiation unit 3.

The moving unit 6 vertically moves the feeding position of the filler material F by the filler material feeder 2 and the irradiation position of the laser beam B by the beam irradiation unit 3. In the present embodiment, the moving unit 6 includes a rail 6a fixed to an apparatus frame (not shown) of the overlay welding apparatus 1 so as to extend in a vertical direction, a slider 6b provided movably in the vertical direction along the rail 6a and fitted with the frame 9, and a motor 6c as a drive source of a moving mechanism (not shown) that moves the slider 6b along the rail 6a. The moving unit 6 also includes a mechanism that moves the feeding position of the filler material F by the filler material feeder 2 and the irradiation position of the laser beam B by the beam irradiation unit 3 in a horizontal direction, that is, although not shown in the drawings, a motor that becomes a drive source of the rail, the slider, and the horizontal moving mechanism for supporting the rail 6a movably in the horizontal direction with respect to the apparatus frame of the overlay welding apparatus 1.

The feeding position of the filler material F by the filler material feeder 2 is on a bottom face of the depression 51 in the base material 50 and a position away from the center line S of the depression 51. The feeding position of the filler material F is set to be away from the center line S by 2 millimeters, for example, when the hole diameter of the depression 51 is φ16 millimeters. The filler material F is fed by the filler material feeder 2 along the center line S. The irradiation position of the laser beam B by the beam irradiation unit 3 is on the bottom face of the depression 51 in the base material 50, and a position away from the center line S of the depression 51 to melt the filler material F at the feeding position of the filler material F. For example, when the hole diameter of the depression 51 is φ16 millimeters, the irradiation position of the laser beam B is away from the center line S by 3 millimeters, that is, a position away from the feeding position of the filler material F by 1 millimeter. The laser beam B is irradiated by the beam irradiation unit 3 by inclining the laser beam B by a predetermined angle (for example, 10 degrees) with respect to the center line S. The distance and angle with respect to the center line S of the filler material F to be fed by the filler material feeder 2 and the distance and angle with respect to the center line S of the laser beam B to be irradiated by the filler material feeder 2 are adjusted depending on the inner diameter and depth of the depression 51, and the size and material of the base material 50.

The temperature measurement unit 7 measures a temperature of an overlaid portion (denoted by W in other drawings) formed by the filler material F melted by the laser beam B. For example, in the present embodiment, a thermocouple or a radiation thermometer is applied as the temperature measurement unit 7.

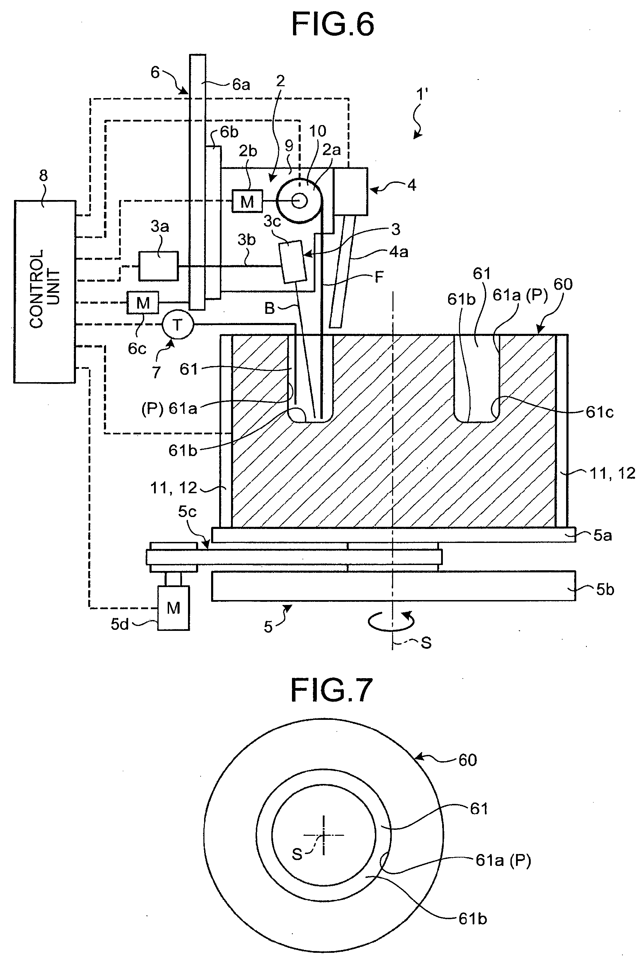

The overlay welding apparatus 1 can include a preheating unit 11 that preheats the base material 50, and a post-heating unit 12 that cools and then post-heats the base material 50. The preheating unit 11 and the post-heating unit 12 are mounted on an outer periphery of the base material 50 or installed on the arrangement member 5a of the rotation unit 5. In FIG. 1 (or FIG. 6), the preheating unit 11 and the post-heating unit 12 are shown in a mode of being attached to the periphery of the base material 50. However, the preheating unit 11 and the post-heating unit 12 can be constituted as a separately placed furnace or burner, as the configuration of the overlay welding apparatus 1.

The control unit 8 is constituted by a microcomputer or the like, in which programs and data for controlling the filler material feeder 2, the beam irradiation unit 3, the shielding gas feeder 4, the rotation unit 5, the moving unit 6, the heating unit 10, the preheating unit 11, and the post-heating unit 12 are stored in a storage unit (not shown) such as a RAM or a ROM. Specifically, the control unit 8 controls the motor 2b of the filler material feeder 2 for feeding the filler material F. The control unit 8 controls the laser generation source 3a of the beam irradiation unit 3 for irradiating the laser beam B. The control unit 8 controls the shielding gas feeder 4 for feeding shielding gas. The control unit 8 controls the moving unit 6 to move the feeding positions of the filler material F and the laser beam B vertically, assuming that feeding of the filler material F and irradiation of the laser beam B are performed at respective feeding positions. The control unit 8 controls the rotation unit 5 to rotate the base material 50 so that the depression 51 and the respective feeding positions relatively rotate and move around the center line S of the depression 51. The control unit 8 acquires the temperature measured by the temperature measurement unit 7 to control the motor 2b of the filler material feeder 2 that feeds the filler material F and control the laser generation source 3a of the beam irradiation unit 3 that irradiates the laser beam B based on the temperature. The control unit 8 controls the heating unit 10 for heating the filler material F. The control unit 8 controls the preheating unit 11 for preheating the base material 50. The control unit 8 also controls the post-heating unit 12 for post-heating the base material 50.

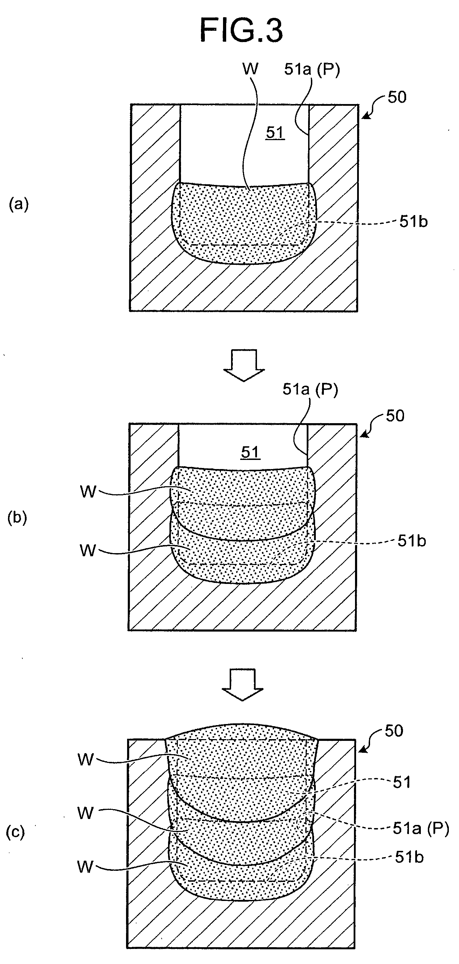

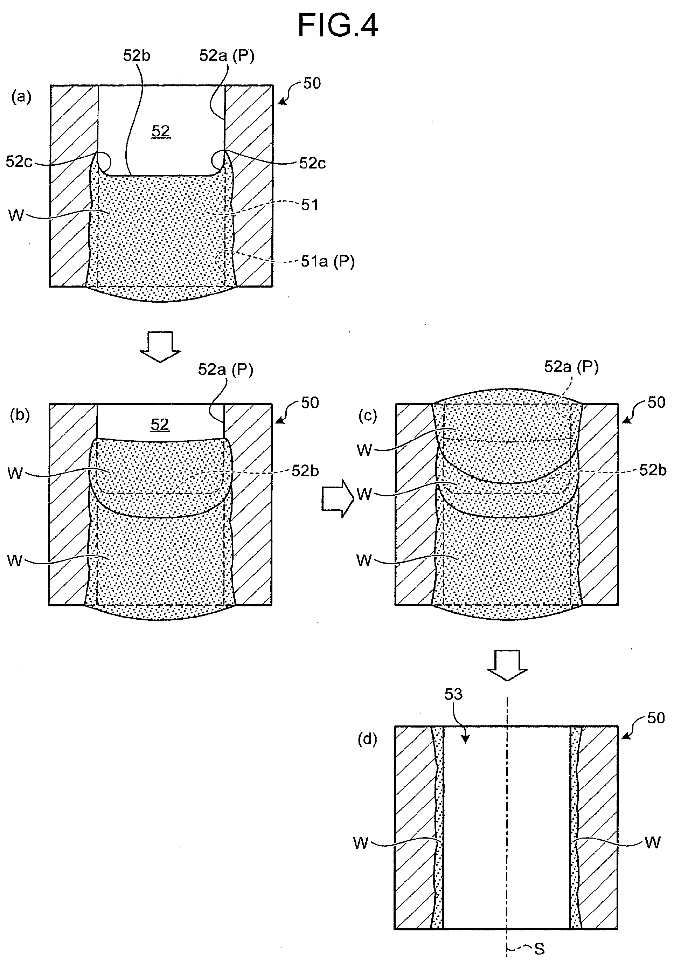

An overlay welding method according to the present embodiment, which is a control method of the overlay welding apparatus 1, is explained below. FIGS. 3 and 4 are process diagrams of the overlay welding method according to the present embodiment.

First, as a preparing process before performing overlay welding, the depression 51 having a bottom face 51b is formed, designating the circumferential surface 51a as the surface P to be overlaid. The circumferential surface 51a of the depression 51 has preferably a circular shape as shown in FIG. 2; however, the circumferential surface 51a can have a polygonal shape.

An overlaying process is performed next. As shown in FIG. 1, in the overlaying process, the filler material F is fed toward the bottom face 51b of the depression 51, the laser beam B as the heat source is irradiated on the bottom face 51b of the depression 51 to which the filler material F is fed, and as shown in FIG. 3(a), the overlaid portion W reaching the surface P to be overlaid (the circumferential surface 51a) is formed, while filling the bottom face 51b of the depression 51 with the melted filler material F.

As shown in FIG. 1, in the overlaying process, by the overlay welding apparatus 1, feeding of the filler material F by the filler material feeder 2 and irradiation of the laser beam B by the beam irradiation unit 3 are performed toward the bottom face 51b so as to be away from the center line S of the depression 51, while shielding gas is fed by the shielding gas feeder 4. The moving unit 6 moves the feeding position of the filler material F and the irradiation position of the laser beam B upward so as to be away from the bottom face 51b of the depression 51, and the rotation unit 5 rotates the base material 50 around the center line S of the depression 51, thereby forming the overlaid portion W. At this time, the filler material F to be fed is heated by the heating unit 10. Before forming the overlaid portion W, the base material 50 is preheated by the preheating unit 11. After formation of the overlaid portion W, heat of the base material 50 is gradually cooled by the post-heating unit 12.

Furthermore, in the overlaying process, as shown in FIG. 3(b), a new overlaid portion W is layered on the formed overlaid portion W. As shown in FIG. 3(c), this process is repeated until the depression 51 is completely filled and the overlay welding has been performed on the entire surface P to be overlaid (the entire circumferential surface 51a). In the overlaying process, if the depression 51 is completely filled with the overlaid portion W formed in one layer (one pass) and overlay welding is performed on the entire surface P to be overlaid (the entire circumferential surface 51a), the overlaid portion W does not need to be formed in plural layers (plural passes). When the new overlaid portion W is further layered, the overlay welding apparatus 1 measures the temperature of the previously formed overlaid portion W by the temperature measurement unit 7, and forms the new overlaid portion W when the measured temperature becomes within a predetermined range.

After the overlaying process, as shown in FIG. 4(a), the base material 50 is vertically reversed and a new depression 52 reaching the bottom face 51b of the depression 51 is formed in the base material 50 as a re-preparing process. The new depression 52 includes the surface P to be overlaid as a circumferential surface 52a and the previously formed overlaid portion W as a bottom face 52b. As shown in FIGS. 4(b) and 4(c), overlay welding is performed with respect to the new depression 52 as a re-overlaying process as in the overlaying process described above. As shown in FIG. 4(d), as a machining process, a through hole 53 along the center line S of the depressions 51 and 52 is formed in the base material 50 so that the overlaid portion W is used as a circumferential surface. The overlaid portion W is formed on an inner circumferential surface of the through hole 53 formed in the base material 50 by the machining process. The through hole 53 has abrasion resistance because hard overlaid portions W are provided on the circumferential surface thereof. After the overlaying process is performed, if the through hole 53 along the center line S of the depression 51 is formed in the base material 50, the overlaid portion W is formed on the inner circumferential surface of an opening of the through hole 53 formed on the base material 50.

As described above, the overlay welding method according to the present embodiment includes the preparing process of forming the depression 51 (52) having the bottom face 51b (52b), designating the circumferential surface 51a (52a) as the surface P to be overlaid, and the overlaying process in which the filler material F is fed toward the bottom face 51b (52b) of the depression 51 (52) and the laser beam B as the heat source is irradiated on the bottom face 51b (52b) of the depression 51 (52) to which the filler material F is fed, thereby forming the overlaid portion W reaching the surface P to be overlaid while filling the bottom face 51b (52b) of the depression 51 (52) with the melted filler material F.

According to the overlay welding method, the melted filler material F comes in contact with the surface P to be overlaid, and the surface P to be overlaid melts due to heat of the filler material F. That is, heat of the laser beam B is not directly applied to the surface P to be overlaid, and the heat of the melted filler material F is indirectly applied thereto. Therefore, a heat input to the base material 50 is suppressed, thereby enabling to suppress melting of the base material 50 to the minimum. As a result, dilution of the base material 50 into the melted filler material F can be reduced, thereby enabling to increase the hardness of the overlaid portion W. Furthermore, because the heat input to the base material 50 can be suppressed, welding defects (porosity, blowholes, cracks due to an expansion difference between the base material 50 and the filler material F, and the like) can be prevented. Further, it is not so difficult to fill the bottom face 51b (52b) of the depression 51 (52) with the melted filler material F, and overlay welding can be easily performed. Furthermore, when overlay welding is performed spirally along a position of the surface P to be overlaid, a dent is likely to be formed at the center, and cracks centering from the dent are easily generated. However, as in the overlay welding method according to the present invention, if overlay welding is performed so as to fill the bottom face 51b (52b) of the depression 51 (52), the overlaid portion W is formed in a layered manner, and thus a dent is not formed and generation of cracks can be prevented.

According to the overlay welding method of the present embodiment, in the overlaying process, a new overlaid portion W is further layered on the formed overlaid portion W.

When heat is input to the filler material F continuously, even if dilution with the base material 50 is small, crystal grains grow largely and a required hardness may not be secured. However, according to the overlay welding method, by layering the overlaid portion W intermittently, grain coarsening can be prevented and the required hardness can be secured.

According to the overlay welding method of the present embodiment, in the overlaying process, the filler material F is heated and fed.

According to the overlay welding method, because the filler material F easily melts, an output of the laser beam B can be decreased, and the heat input to the base material 50 can be further suppressed.

According to the overlay welding method of the present embodiment, in the overlaying process, the base material 50 is preheated before forming the overlaid portion W, and the base material 50 is post-heated after the overlaid portion W is formed.

Tensile stress associated with restraint to the overlaid portion W is large depending on the shape of the base material 50, and cracks may be generated in the overlaid portion W. However, according to the overlay welding method, by using the preheating process and the post-heating process simultaneously, the tensile stress associated with restraint to the overlaid portion W by the base material 50 is suppressed, thereby enabling to prevent generation of cracks in the overlaid portion W.

According to the overlay welding method of the present embodiment, in the overlaying process, feeding of the filler material F (the filler material feeder 2) and irradiation of the laser beam B for melting the filler material F (the beam irradiation unit 3) are performed for plural times.

According to the overlay welding method, efficiency of the overlay welding can be improved.

According to the overlay welding method of the present embodiment, in the preparing process, as shown in FIG. 1 or FIGS. 4, a corner 51c (52c) connecting the circumferential surface 51a (52a) of the depression 51 (52) and the bottom face 51b (52b) of the depression 51 (52) is formed in a circular arc shape.

According to the overlay welding method, the flow of the melted filler material F is facilitated at the corner 51c (52c), and thus incomplete fusion between the base material 50 and the filler material F can be prevented.

According to the overlay welding method of the present embodiment, in the preparing process, the bottom face 51b (52b) of the depression 51 (52) is formed in a flat shape or a concave shape having a large angle of aperture.

According to the overlay welding method, because the filler material F at the melted portion is planarized by the bottom face 51b (52b) of the depression 51 (52), weld penetration of the filler material F into the base material 50 can be stabilized. When a blade edge of a cutting tool for forming the depression 51 (52) is formed in a shape having a large angle of aperture and nearly being a flat shape (for example, equal to or larger than 120°C), there is no problem even if the bottom face 51b (52b) of the depression 51 (52) is not formed in a flat shape.

The overlay welding method according to the present embodiment includes the re-preparing process of forming the new depression 52 reaching the bottom face 51b of the depression 51 in the base material 50 after the overlaying process, and a re-overlaying process of performing overlay welding with respect to the new depression 52 as in the overlaying process.

According to the overlay welding method, when the base material 50 is thick (when the depression is deep), overlay welding can be performed easily by reducing the depth of the depressions 51 and 52.

The overlay welding method according to the present embodiment includes the machining process in which the through hole 53 is formed in the base material 50 along the center line S of the depression 51 (52) after the overlaying process or the re-overlaying process.

According to the overlay welding method, the overlaid portion W can be formed on the inner circumferential surface of the opening of the through hole 53 formed in the base material 50, or on the inner circumferential surface of the through hole 53 formed in the base material 50.

According to the overlay welding method of the present embodiment, in the overlaying process, feeding of the filler material F and irradiation of the laser beam B are performed so as to be away from the center line S of the depression 51 (52), the feeding position of the filler material F and the irradiation position of the laser beam B are moved upward so as to be away from the bottom face 51b (52b) of the depression 51 (52), and the base material 50 is rotated around the center line S of the depression 51 (52) to form the overlaid portion W.

According to the overlay welding method, the overlay welding in which the melted filler material F is brought into contact with the surface P to be overlaid to melt the surface P to be overlaid by the heat of the filler material F can be performed with excellent repeatability, and automation becomes possible.

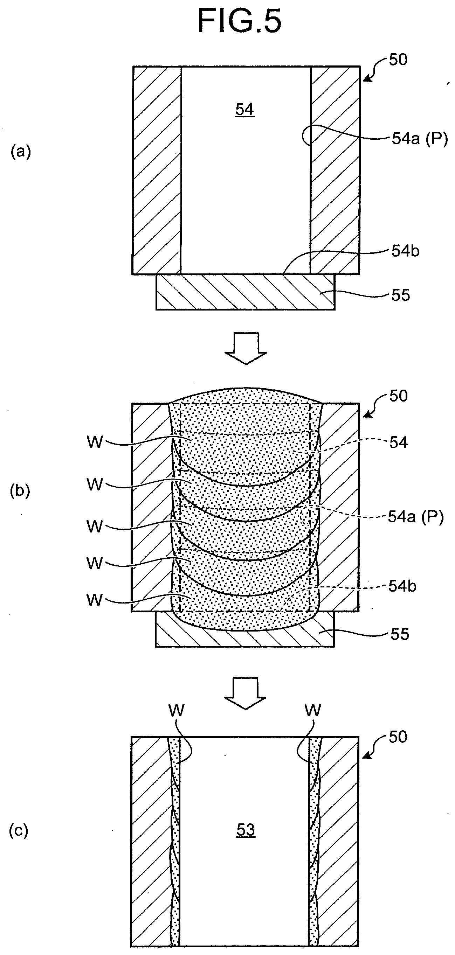

FIGS. 5 are process diagrams of another overlay welding method according to the present embodiment. As shown in FIG. 5(a), according to this overlay welding method, in the preparing process, a circumferential surface 54a of a through hole 54 formed in the base material 50 itself is designated as the surface P to be overlaid. One opening of the through hole 54 is blocked by a blocking member 55 formed of the same material as that of the filler material F or the base material 50, thereby forming a bottom face 54b. Thereafter, as shown in FIG. 5(b), the overlaying process described above is performed. As shown in FIG. 5(c), the machining process is then performed. The material of the blocking member 55 is not limited to a plate material abutting on the one opening of the through hole 54, and although not shown in FIGS. 5, it can be a rod material to be inserted into one opening of the through hole 54.

According to this overlay welding method, the depression 52 does not need to be formed. Therefore, machining can be completed by one-side machining, thereby enabling to improve efficiency of the machining. Furthermore, position adjustment between the depression 51 and the depression 52 does not need to be performed, thereby enabling to improve positional accuracy in machining of the base material 50 can be improved. By forming the blocking member 55 by the same material as that of the filler material F, a certain hardness of the overlaid portion W in a first layer (a first pass) formed on the bottom face 54b can be secured. Meanwhile, by forming the blocking member 55 by the same material as that of the base material 50, manufacturing costs of the blocking member 55 can be reduced and material procurement efficiency can be improved, as compared to a case of forming the blocking member 55 by the same material as that of the filler material F.

Further, in the overlay welding apparatus 1 according to the present embodiment, the bottomed depression 51 (52) is provided to the base material 50, and overlay welding is performed, designating the circumferential surface 51a (52a) of the depression 51 (52) as the surface P to be overlaid. The overlay welding apparatus 1 includes the filler material feeder 2 that feeds the filler material F, the beam irradiation unit 3 that irradiates the laser beam B, which become a heat source for melting the filler material F, the shielding gas feeder 4 that feeds shielding gas to an atmosphere in which the filler material F is melted by the laser beam B, the rotation unit 5 that rotates the base material 50 around the center line S of the depression 51 (52), and the moving unit 6 that supports the filler material feeder 2 and the beam irradiation unit 3 so that a feeding position of the filler material F by the filler material feeder 2 and an irradiation position of the laser beam B by the beam irradiation unit 3 reach the bottom face 51b (52b) of the depression 51 (52), while being away from the center line S of the depression 51 (52), and moves the feeding position of the filler material F and the irradiation position of the laser beam B along the center line S of the depression 51 (52).

According to the overlay welding method of the present embodiment, an overlaying process can be performed such that feeding of the filler material F and irradiation of the laser beam B are performed on the bottom face 51b (52b) of the depression 51 (52) so as to be away from the center line S of the depression 51 (52), the feeding position of the filler material F and the irradiation position of the laser beam B are moved upward so as to be away from the bottom face 51b (52b) of the depression 51 (52), and the base material 50 is rotated around the center line S of the depression 51 (52), to form the overlaid portion W. Accordingly, dilution of the base material 50 into the melted filler material F can be reduced, thereby enabling to increase the hardness of the overlaid portion W. Furthermore, because the heat input to the base material 50 can be suppressed, welding defects (porosity, blowholes, cracks due to an expansion difference between the base material 50 and the filler material F, and the like) can be prevented. Further, it is not so difficult to fill the bottom face 51b (52b) of the depression 51 (52) with the melted filler material F, and overlay welding can be easily performed to enable automation.

### [Second embodiment]

FIG. 6 is a schematic diagram of an overlay welding apparatus which can be used to perform the overlay welding method according to another embodiment of the present invention, and FIG. 7 is a plan view of a base material subjected to overlay welding.

As shown in FIGS. 6 and 7, in an overlay welding apparatus 1' according to the present embodiment, a base material 60 subjected to overlay welding is different from that in the overlay welding apparatus 1 according to the first embodiment. That is, in the overlay welding apparatus 1', a depression 61 formed of a circular annular groove is provided to the base material 60, and overlay welding is performed by using the depression 61 as a groove for welding. Because the basic configuration of the overlay welding apparatus 1' is identical to that of the overlay welding apparatus 1 according to the first embodiment, like reference signs are denoted to like elements, and explanations thereof will be omitted. A feature of the present embodiment different from the first embodiment is that the rotation unit 5 rotates the base material 60 around the center line S of the circular annular groove in the depression 61.

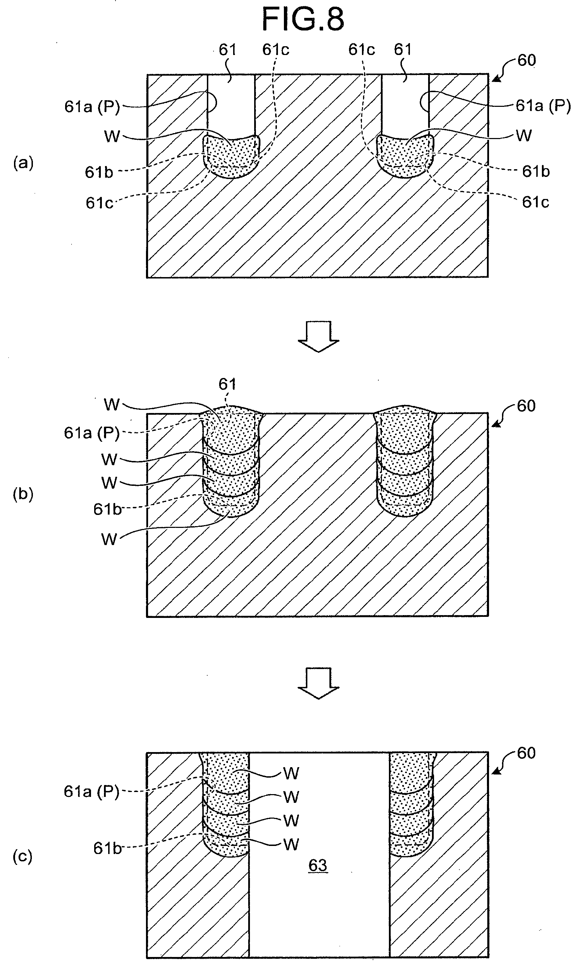

An overlay welding method according to the present embodiment, which is a control method of the overlay welding apparatus 1, is explained below. FIGS. 8 are process diagrams of the overlay welding method according to the present embodiment.

First, as a preparing process before performing overlay welding, the depression 61, which is a bottomed annular groove, is formed with respect to the base material 60, and a circumferential surface 61a on an outer peripheral side of the annular groove is designated as the surface P to be overlaid.

An overlay welding process is performed next. As shown in FIG. 6, in the overlay welding process, the filler material F is fed toward a bottom face 61b of the depression 61, the laser beam B as a heat source is irradiated on the bottom face 61b of the depression 61 to which the filler material F is fed, and as shown in FIG. 8(a), the overlaid portion W reaching the surface P to be overlaid (the circumferential surface 61a) is formed, while filling the bottom face 61b of the depression 61 with the melted filler material F.

As shown in FIG. 6, in the overlaying process, by the overlay welding apparatus 1', feeding of the filler material F by the filler material feeder 2 and irradiation of the laser beam B by the beam irradiation unit 3 are performed toward the bottom face 61b, while shielding gas is fed by the shielding gas feeder 4. The moving unit 6 moves the feeding position of the filler material F and the irradiation position of the laser beam B upward so as to be away from the bottom face 61b of the depression 61, and the rotation unit 5 rotates the base material 60 around the center line S of the circular annular groove in the depression 61, thereby forming the overlaid portion W. At this time, the filler material F to be fed is heated by the heating unit 10. Before forming the overlaid portion W, the base material 50 is preheated by the preheating unit 11. After formation of the overlaid portion W, heat of the base material 50 is gradually cooled by the post-heating unit 12.

Furthermore, in the overlaying process, as shown in FIG. 8(b), a new overlaid portion W is layered on the formed overlaid portion W. As shown in FIG. 8(c), this process is repeated until the depression 61 is completely filled and the overlay welding has been performed on the entire surface P to be overlaid (the entire circumferential surface 61a). In the overlaying process, if the depression 61 is completely filled with the overlaid portion W formed in one layer (one pass) and overlay welding is performed on the entire surface P to be overlaid (the entire circumferential surface 61a), the overlaid portion W does not need to be formed in plural layers (plural passes). When the new overlaid portion W is further layered, the overlay welding apparatus 1' measures the temperature of the previously formed overlaid portion W by the temperature measurement unit 7, and forms the new overlaid portion W when the measured temperature becomes within a predetermined range.

As a machining process, as shown in FIG. 8(c), a through hole 63 is formed in the base material 60 by cutting an inner peripheral side of the annular groove along the center line S of the depression 61 so that the overlaid portion W becomes a circumferential surface. By the machining process, the overlaid portion W is formed on an inner circumferential surface of an opening of the through hole 63 formed in the base material 60. The through hole 63 has abrasion resistance because hard overlaid portions W are provided on the circumferential surface thereof.

As described above, the overlay welding method according to the present invention includes the preparing process of forming the depression 61 having the bottom face 61b, designating the circumferential surface 61a as the surface P to be overlaid, and the overlaying process in which the filler material F is fed toward the bottom face 61b of the depression 61 and the laser beam B as the heat source is irradiated on the bottom face 61b of the depression 61 to which the filler material F is fed, thereby forming the overlaid portion W reaching the surface P to be overlaid, while filling the bottom face 61b of the depression 61 with the melted filler material F.

According to the overlay welding method, the melted filler material F comes in contact with the surface P to be overlaid, and the surface P to be overlaid melts due to heat of the filler material F. That is, heat of the laser beam B is not directly applied to the surface P to be overlaid, and the heat of the melted filler material F is indirectly applied thereto. Therefore, a heat input to the base material 60 is suppressed, thereby enabling to suppress melting of the base material 60 to the minimum. As a result, dilution of the base material 60 into the melted filler material F can be reduced, thereby enabling to increase the hardness of the overlaid portion W. Furthermore, because the heat input to the base material 60 can be suppressed, welding defects (porosity, blowholes, cracks due to an expansion difference between the base material 60 and the filler material F, and the like) can be prevented. Further, it is not so difficult to fill the bottom face 61b of the depression 61 with the melted filler material F, and overlay welding can be easily performed. Furthermore, when overlay welding is performed spirally along a position of the surface P to be overlaid, a dent is likely to be formed at the center, and cracks centering from the dent are easily generated. However, as in the overlay welding method according to the present embodiment, if overlay welding is performed so as to fill the bottom face 61b of the depression 61, the overlaid portion W is formed in a layered manner, and thus a dent is not formed and generation of cracks can be prevented.

Particularly, according to the overlay welding method of the present embodiment, in the preparing process, the depression 61 in which the circumferential surface 61a on the outer peripheral side of the bottomed annular groove formed in the base material 60 itself is designated as the surface P to be overlaid is set as a groove for welding. Even by this overlay welding method, a certain hardness of the overlaid portion W can be secured and overlay welding can be performed easily, while preventing welding defects.

Furthermore, according to the overlay welding method of the present embodiment, in the overlaying process, a new overlaid portion W is further layered on the formed overlaid portion W.

When heat is input to the filler material F continuously, even if dilution with the base material 60 is small, crystal grains grow largely and a required hardness may not be secured. However, according to the overlay welding method, by layering the overlaid portions W intermittently, grain coarsening can be prevented and the required hardness can be secured.

According to the overlay welding method of the present embodiment, in the overlaying process, the filler material F is heated and fed.

According to the overlay welding method, because the filler material F easily melts, an output of the laser beam B can be decreased, and the heat input to the base material 60 can be further suppressed.

According to the overlay welding method of the present embodiment, in the overlaying process, the base material 60 is preheated before forming the overlaid portion W, and the base material 60 is post-heated after the overlaid portion W is formed.

Tensile stress associated with restraint to the overlaid portion W is large depending on the shape of the base material 60, and cracks may be generated in the overlaid portion W. However, according to the overlay welding method, by using the preheating process and the post-heating process simultaneously, the tensile stress associated with restraint to the overlaid portion W by the base material 60 is suppressed, thereby enabling to prevent cracks in the overlaid portion W.

According to the overlay welding method of the present embodiment, in the overlaying process, feeding of the filler material F (the filler material feeder 2) and irradiation of the laser beam B for melting the filler material F (the beam irradiation unit 3) are performed for plural times. In this case, the filler material feeder 2 and the beam irradiation unit 3 provided in plural are provided at a plurality of positions in a circumferential direction of the circular annular groove.

According to the overlay welding method, efficiency of the overlay welding can be improved.

According to the overlay welding method of the present embodiment, in the preparing process, as shown in FIG. 6 or FIGS. 8, a corner 61c connecting the circumferential surface 61a and the bottom face 61b of the depression 61 is formed in a circular arc shape.

According to the overlay welding method, the flow of the melted filler material F is facilitated at the corner 61c, and thus incomplete fusion between the base material 60 and the filler material F can be prevented.

According to the overlay welding method of the present embodiment, in the preparing process, the bottom face 61b (52b) of the depression 61 is formed in a flat shape or a concave shape having a large angle of aperture.

According to the overlay welding method, because the filler material F at the melted portion is planarized by the bottom face 61b of the depression 61, weld penetration of the filler material F into the base material 60 can be stabilized.

The overlay welding method according to the present embodiment includes, after the overlaying process, the machining process in which the inner periphery side of the annular groove is cut to form the through hole 63 penetrating the base material 60.

According to the overlay welding method, the overlaid portion W can be formed on the inner circumferential surface of the opening of the through hole 63 formed in the base material 60. The overlaid portion W can be formed on an outer circumferential surface of an end portion of a columnar base material 60, by cutting an outer periphery of the base material 60, which is on the outer periphery side of the annular groove.

Furthermore, according to the overlay welding method of the present embodiment, in the preparing process, the depression 61 is formed as a circular annular groove, and in the overlaying process, feeding of the filler material F and irradiation of the laser beam are performed toward the bottom face 61b of the depression 61, the feeding position of the filler material F and the irradiation position of the laser beam B are moved upward so as to be away from the bottom face 61b of the depression 61, and the base material 60 is rotated around the center line S of the circular annular groove in the depression 61 to form the overlaid portion W.

According to the overlay welding method, overlay welding in which the melted filler material F is brought into contact with the surface P to be overlaid to melt the surface P to be overlaid by the heat of the filler material F can be performed with excellent repeatability, and automation becomes possible.

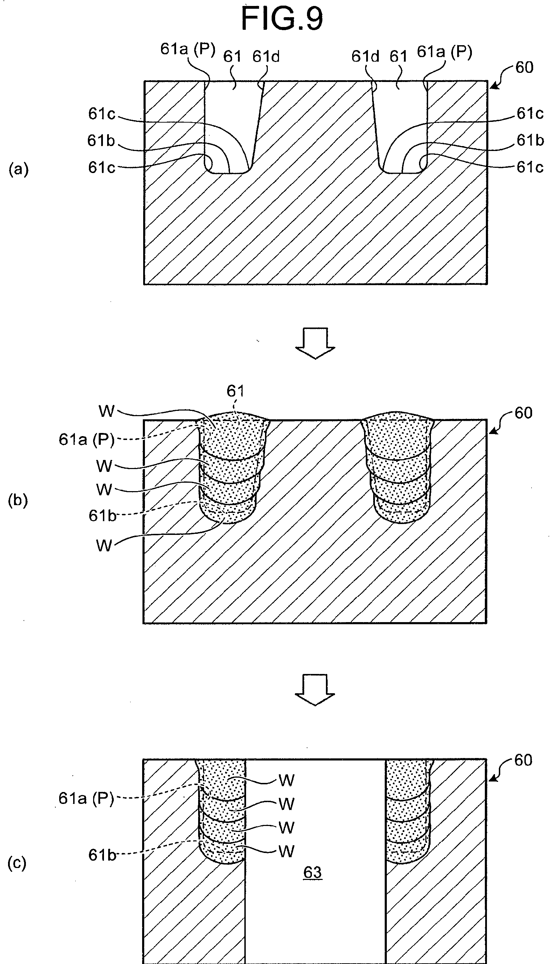

FIGS. 9 are process diagrams of another overlay welding method according to the present embodiment. As shown in FIG. 9(a), according to this overlay welding method, in a preparing process, a circumferential surface on an inner periphery side of the depression 61 formed of an annular groove is designated as a tapered surface 61d with a groove width being gradually narrowed toward the bottom face 61b. Thereafter, as shown in FIG. 9(b), the overlaying process described above is performed, and the machining process is then performed as shown in FIG. 9(c).

According to the overlay welding method, the melted filler material F easily flows due to the tapered surface 61d toward the circumferential surface 61a on the outer periphery side of the depression 61, which is the surface P to be overlaid, thereby enabling to prevent incomplete fusion between the base material 60 and the filler material F. Furthermore, because the opening side of the depression 61, which becomes a groove for welding, becomes wide due to the tapered surface 61d, welding can be performed more easily.

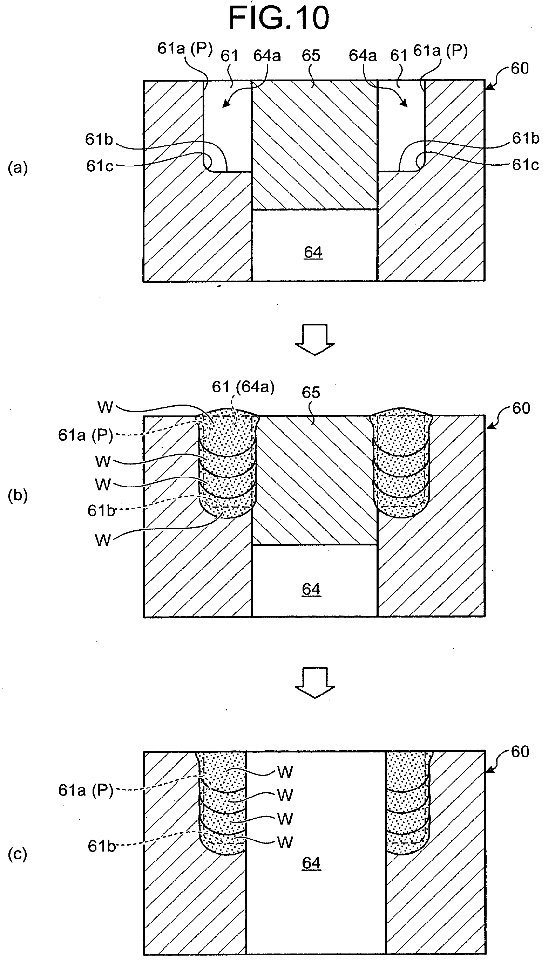

FIGS. 10 are process diagrams of another overlay welding method according to the present embodiment. As shown in FIG. 10(a), according to this overlay welding method, in the preparing process, a stepped portion 64a is provided by cutting the circumferential surface of an opening in a through hole 64 formed in the base material 60 itself, a circumferential surface of the stepped portion 64a is designated as the surface P to be overlaid, and an insertion member 65 formed of the same material as that of the filler material F or the same material as that of the base material 60 and having an outer circumferential surface abutting on the circumferential surface of the through hole 64 is inserted into the through hole 64, thereby forming the depression 61 as an annular groove, by the stepped portion 64a and the insertion member 65. Thereafter, as shown in FIG. 10(b), the overlaying process described above is performed, and, as shown in FIG. 10(c), the insertion member 65 is then removed from the through hole 64. It suffices that the insertion member 65 is formed to have the outer circumferential surface abutting on the circumferential surface of the through hole 64. Although not shown in FIGS. 10, the insertion member 65 is not limited to the rod material shown in FIG. 10(a), and can be a tubular material.

According to the overlay welding method, the overlaid portion W can be formed on the inner circumferential surface of the opening of the through hole 63 formed in the base material 60. Furthermore, by forming the insertion member 65 by the same material as that of the filler material F, a certain hardness of the overlaid portion W can be secured. Meanwhile, by forming the insertion member 65 by the same material as that of the base material 60, manufacturing costs of the insertion member 65 can be reduced and material procurement efficiency can be improved, as compared to a case of forming the insertion member 65 by the same material as that of the filler material F.

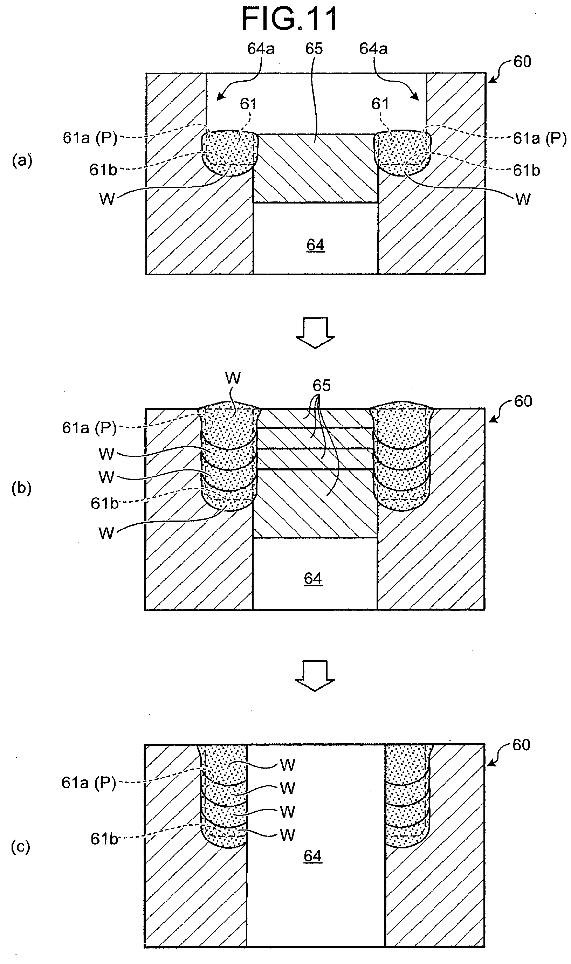

FIGS. 11 are process diagrams of another overlay welding method according to the present embodiment. As shown in FIG. 11(a), according to this overlay welding method, the insertion member 65 described above is formed in a divided manner. The depression 61 is formed for only one layer (one pass) of the overlaid portion W by the divided insertion member 65. Thereafter, as shown in FIG. 11(b), overlay welding is performed to form the overlaid portion W sequentially, while layering the insertion member 65 sequentially so as to form the depression 61 for the next layer (the next pass). Thereafter, as shown in FIG. 11(c), the insertion member 65 is removed from the through hole 64. It suffices that the divided insertion member 65 is formed to have an outer circumferential surface abutting on the circumferential surface of the through hole 64. Although not shown in FIGS. 11, the insertion member 65 is not limited to the rod material shown in FIG. 11(a), and can be a tubular material.

According to the overlay welding method, the depression 61 can be formed for one layer (one pass) of the overlaid portion W by the divided insertion member 65, as compared to a case of using a block of the insertion member 65 shown in FIG. 10(a). Accordingly, overlay welding does not need to be performed with respect to a narrow groove, thereby enabling to improve accessibility for feeding the filler material F to the bottom face 61b of the depression 61 and irradiating the laser beam B.

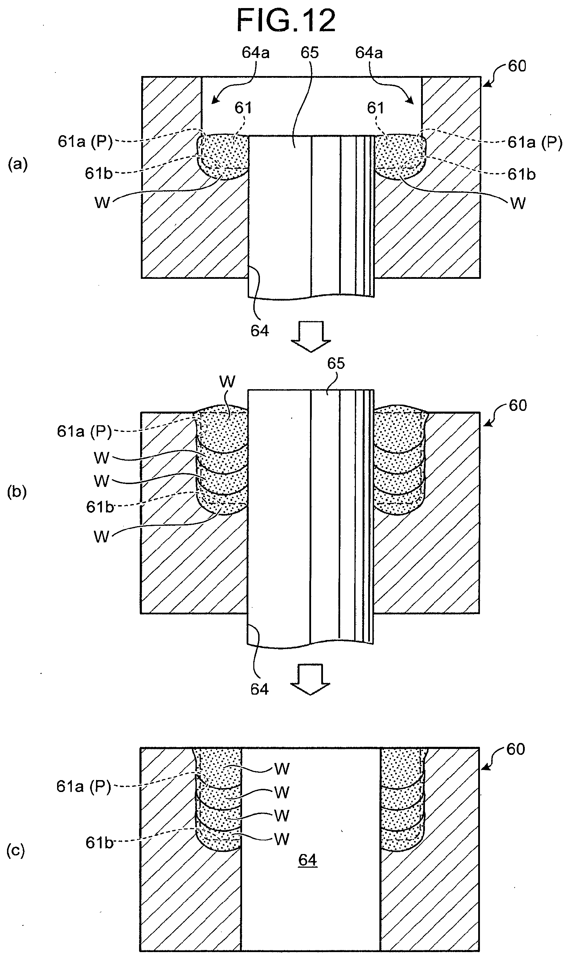

FIGS. 12 are process diagrams of another overlay welding method according to the present embodiment. As shown in FIG. 12(a), according to this overlay welding method, the insertion member 65 described above is cooled. For example, when the insertion member 65 is cooled, the insertion member 65 is formed of a material having a high thermal conductivity (for example, copper) or a material having high heat resistance (a high melting point) (for example, tungsten) to provide a water channel (not shown), and cooling water is caused to pass through the water channel. When the insertion member 65 is cooled, the melted filler material F does not fuse on the outer circumferential surface, thereby enabling to separate the insertion member 65 from the overlaid portion W. Therefore, as shown in FIG. 12(a), the depression 61 is formed by the insertion member 65 for only one layer (one pass) of the overlaid portion W. Thereafter, as shown in FIG. 12(b), overlay welding is performed so as to form the depression 61 for the next layer (the next pass), while sequentially moving the insertion member 65, thereby forming the overlaid portion W sequentially. As shown in FIG. 12(c), the insertion member 65 is removed from the through hole 64.

According to the overlay welding method, because the cooled insertion member 65 can be separated from the overlaid portion W, different from the insertion member 65 shown in FIGS. 10 and FIGS. 11, the insertion member can be used repeatedly for overlay welding. Furthermore, because the cooled insertion member 65 also cools the melted filler material F, the heat input to the surface P to be overlaid can be suppressed, and the overlaid portion W having a high hardness can be acquired.

Further, in the overlay welding apparatus 1' according to the present embodiment, the depression 61 formed of a circular annular groove is provided to the base material 60, and overlay welding is performed, designating the depression 61 as a groove for welding. The overlay welding apparatus 1 includes the filler material feeder 2 that feeds the filler material F, the beam irradiation unit 3 that irradiates the laser beam B, which become a heat source for melting the filler material F, the shielding gas feeder 4 that feeds shielding gas to an atmosphere in which the filler material F is melted by the laser beam B, the rotation unit 5 that rotates the base material 60 around the center line S of the depression 61, and the moving unit 6 that supports the filler material feeder 2 and the beam irradiation unit 3 so that a feeding position of the filler material F by the filler material feeder 2 and an irradiation position of the laser beam B by the beam irradiation unit 3 reach the bottom face 61b of the depression 61, and moves the feeding position of the filler material F and the irradiation position of the laser beam B around the center line S of the circular annular groove in the depression 61.

According to the overlay welding apparatus 1', an overlaying process can be performed such that feeding of the filler material F and irradiation of the laser beam B are performed on the bottom face 61b of the depression 61, the feeding position of the filler material F and the irradiation position of the laser beam B are moved upward so as to be away from the bottom face 61b of the depression 61, and the base material 60 is rotated around the center line S of the circular annular groove in the depression 61, to form the overlaid portion W. Therefore, dilution of the base material 60 into the melted filler material F can be reduced, thereby enabling to increase the hardness of the overlaid portion W. Furthermore, because the heat input to the base material 60 can be suppressed, welding defects (porosity, blowholes, cracks due to an expansion difference between the base material 60 and the filler material F, and the like) can be prevented. Furthermore, it is not so difficult to fill the bottom face 61b of the depression 61 with the melted filler material F, and overlay welding can be easily performed to enable automation.

### Reference Signs List

- 1, 1': overlay welding apparatus
- 2: filler material feeder
- 3: beam irradiation unit
- 4: shielding gas feeder
- 5: rotation unit
- 6: moving unit
- 7: temperature measurement unit
- 8: control unit
- 10: heating unit
- 11: preheating unit
- 12: post-heating unit
- 50: base material
- 51: depression
- 51a: circumferential surface
- 51b: bottom face
- 51c: corner
- 52: depression
- 52a: circumferential surface
- 52b: bottom face
- 53: through hole
- 54: through hole
- 54a: circumferential surface
- 54b: bottom face
- 55: blocking member
- 60: base material
- 61: depression
- 61a: circumferential surface
- 61b: bottom face
- 61c: corner
- 61d: tapered surface
- 63: through hole
- 64: through hole
- 64a: stepped portion
- 65: insertion member

- B: laser beam
- F: filler material
- P: surface to be overlaid
- S: center line
- W: overlaid portion

## Claims

1. An overlay welding method for performing overlay welding on a surface to be overlaid of a base material (50), the method comprising:
a preparing step of forming a bottomed depression (51; 52; 61), with the surface to be overlaid being a circumferential surface (51a; 52a; 61a) thereof; and
an overlaying step at which a filler material (F) is fed toward a bottom face (51b; 52b; 61b) of the depression (51; 52; 61), and a laser beam as a heat source is irradiated on the bottom face (51b; 52b; 61b) of the depression (51; 52; 61) to which the filler material (F) is fed, thereby forming an overlaid portion (W) reaching the surface to be overlaid, while filling the bottom face (51b; 52b; 61b) of the depression (51; 52; 61) with the melted filler material (F),
**characterized by** a machining step at which a through hole (53, 54; 63, 64) is formed in the base material (50) along a center line (S) of the depression (51, 52; 61) after the overlaying step.

2. The overlay welding method according to claim 1, wherein a new overlaid portion (W) is further layered on the formed overlaid portion (W) at the overlaying step.

3. The overlay welding method according to claim 1 or 2, wherein the filler material (F) is heated and fed at the overlaying step.

4. The overlay welding method according to any one of claims 1 to 3, wherein at the overlaying step, the base material (50) is preheated before forming the overlaid portion (W), and the base material (50) is post-heated after the overlaid portion (W) is formed.

5. The overlay welding method according to any one of claims 1 to 4, wherein at the overlaying step, feeding of the filler material (F) and irradiation of a laser beam for melting the filler material (F) are performed for plural times.

6. The overlay welding method according to any one of claims 1 to 5, wherein at the preparing step, a corner (51c; 52c; 61c) connecting the circumferential surface (51a; 52a; 61a) of the depression (51; 52; 61) and the bottom face (51b; 52b; 61b) of the depression (51; 52; 61) is formed in a circular arc shape.

7. The overlay welding method according to any one of claims 1 to 6, wherein at the preparing step, the bottom face (51b; 52b; 61b) of the depression (51; 52; 61) is formed in a flat shape or a concave shape having a large angle of aperture.

8. The overlay welding method according to any one of claims 1 to 7, comprising:
a re-preparing step of forming a new depression (51; 52; 61) reaching the bottom face (51b; 52b; 61b) of the depression (51; 52; 61) in the base material (50) after the overlaying step; and
a re-overlaying step of performing overlay welding to the new depression (51; 52; 61) similarly to the overlaying step.

9. The overlay welding method according to claim 8, wherein the overlaying step is a re-overlaying step.

10. The overlay welding method according to any one of claims 1 to 7, wherein at the preparing step, the bottom face (51b; 52b; 61b) of the depression (51; 52; 61) is formed by blocking one opening of the through hole (53, 54; 63; 64) by a blocking member (55) formed of a same material as that of the filler material (F) or a same material as that of the base material (50), while designating a circumferential surface (51a; 52a; 61a) of the through hole (53, 54; 63; 64) formed in the base material (50) itself as the surface to be overlaid.

11. The overlay welding method according to any one of claims 1 to 10, wherein at the overlaying step, feeding of the filler material (F) and irradiation of the laser beam are performed so as to be away from the center line (S) of the depression (51; 52; 61), a feeding position of the filler material (F) and an irradiation position of the laser beam are moved upward so as to be away from the bottom face (51b; 52b; 61b) of the depression (51; 52; 61), and the base material (50) is rotated around the center line (S) of the depression (51; 52; 61) to form the overlaid portion (W).

12. An overlay welding method for performing overlay welding on a surface to be overlaid of a base material (50), the method comprising:
a preparing step of forming a bottomed depression (51; 52; 61), with the surface to be overlaid being a circumferential surface (51a; 52a; 61a) thereof; and
an overlaying step at which a filler material (F) is fed toward a bottom face (51b; 52b; 61b) of the depression (51; 52; 61), and a laser beam as a heat source is irradiated on the bottom face (51b; 52b; 61) of the depression (51; 52; 61) to which the filler material (F) is fed, thereby forming an overlaid portion (W) reaching the surface to be overlaid, while filling the bottom face (51b; 52b; 61b) of the depression (51; 52; 61) with the melted filler material (F), wherein at the preparing step, a bottomed annular groove formed in the base material (50) itself is designated as the depression (51; 52; 61), with an outer circumferential surface (51a; 52a; 61a) thereof being the surface to be overlaid,
**characterized by** a machining step at which, after the overlaying step, the inner peripheral side of the annular groove is cut to form a through hole (53; 54; 63; 64) penetrating the base material (50).

13. The overlay welding method according to claim 12, wherein a circumferential surface (51a; 52a; 61a) on an inner periphery side of the depression (51; 52; 61) formed of the annular groove is a tapered surface (61d) with a groove width being gradually narrowed toward a bottom face (51b; 52b; 61b).

## Patentansprüche

1. Auftragschweißverfahren zum Durchführen von Auftragschweißen auf einer Oberfläche eines Grundmaterials (50), die belegt werden soll, wobei das Verfahren aufweist:
einen Vorbereitungsschritt des Ausbildens einer Vertiefung mit einem Boden (51; 52; 61), wobei die zu belegende Oberfläche eine Umfangsfläche (51a; 52a; 61a) davon ist; und
einen Auftragschritt bei dem ein Füllmaterial (F) zu der Bodenfläche (51b; 52b; 61b) der Vertiefung (51; 52; 61) hin zugeführt wird und ein Laserstrahl als eine Wärmequelle auf die Bodenfläche (51b; 52b; 61b) der Vertiefung (51; 52; 61) zu der das Füllmaterial (F) zugeführt wird, eingestrahlt wird, wodurch ein Auftragabschnitt (W) ausgebildet wird, der die zu belegende Oberfläche erreicht, während die Bodenfläche (51b; 52b; 61b) der Vertiefung (51; 52; 61) mit dem geschmolzenen Füllmaterial (F) gefüllt wird,
**gekennzeichnet durch** einen Bearbeitungsschritt bei dem eine Durchgangsöffnung (53, 54; 63, 64) in dem Grundmaterial (50) entlang einer Mittellinie (S) der Vertiefung (51, 52; 61) nach dem Auftragschritt ausgebildet wird.

2. Auftragschweißverfahren nach Anspruch 1, wobei
ein neuer Auftragabschnitt (W) in dem Auftragschritt ferner auf dem ausgebildeten Auftragabschnitt (W) geschichtet wird.

3. Auftragschweißverfahren nach Anspruch 1 oder 2, wobei
das Füllmaterial (F) in dem Auftragschritt erwärmt und zugeführt wird.

4. Auftragschweißverfahren nach einem der Ansprüche 1 bis 3, wobei
bei dem Auftragschritt das Grundmaterial (50) vor dem Ausbilden des Auftragabschnitts (W) vorerwärmt wird und das Grundmaterial (50), nachdem der Auftragabschnitt (W) ausgebildet worden ist, nacherwärmt wird.

5. Auftragschweißverfahren nach einem der Ansprüche 1 bis 4, wobei
bei dem Auftragschritt Zuführen des Füllmaterials (F) und Einstrahlung eines Laserstrahls zum Schmelzen des Füllmaterials (F) mehrmalig durchgeführt werden.

6. Auftragschweißverfahren nach einem der Ansprüche 1 bis 5, wobei
bei dem Vorbereitungsschritt eine Ecke (51c; 52c; 61c), welche die Umfangsfläche (51a; 52a; 61a) der Vertiefung (51; 52; 61) und die Bodenfläche (51b; 52b; 61b) der Vertiefung (51; 52; 61) verbindet in einer Kreisbogenform ausgebildet wird.

7. Auftragschweißverfahren nach einem der Ansprüche 1 bis 6, wobei
bei dem Vorbereitungsschritt die Bodenfläche (51b; 52b; 61b) der Vertiefung (51; 52; 62) in einer flachen Form oder einer konkaven Form ausgebildet wird, die einen großen Öffnungswinkel aufweist.

8. Auftragschweißverfahren nach einem der Ansprüche 1 bis 7, mit:
einem erneuten Vorbereitungsschritt des Ausbildens einer neuen Vertiefung (51; 52; 61), welche die Bodenfläche (51b; 52b; 61b) der Vertiefung (51; 52; 61) in dem Grundmaterial (50) nach dem Auftragschritt erreicht; und
einem Wieder-Auftragschritt des Durchführens von Auftragschweißen auf die neue Vertiefung (51; 52; 61) ähnlich zu dem Auftragschritt.

9. Auftragschweißverfahren nach Anspruch 8, wobei der Auftragschritt ein Wieder-Auftragschritt ist.

10. Auftragschweißverfahren nach einem der Ansprüche 1 bis 7, wobei
bei dem Vorbereitungsschritt die Bodenfläche (51b; 52b; 61b) der Vertiefung (51; 52; 61) ausgebildet wird durch Blockieren einer Öffnung des Durchgangslochs (53, 54; 63; 64) durch ein Blockierelement (55), das aus einem gleichen Material wie das des Füllmaterials (F) oder aus einem gleichen Material wie das des Grundmaterials (50) ausgebildet ist, wobei eine Umfangsfläche (51a; 52a; 61a) des Durchgangslochs (53, 54; 63; 64), das in dem Grundmaterial (50) ausgebildet ist, selbst als die zu belegende Oberfläche vorgesehen wird.

11. Auftragschweißverfahren nach einem der Ansprüche 1 bis 10, wobei
bei dem Auftragschritt das Zuführen des Füllmaterials (F) und die Einstrahlung des Laserstrahls derart durchgeführt werden, dass sie entfernt von der Mittellinie (S) der Vertiefung (51; 52; 61) stattfinden, eine Zuführposition des Füllmaterials (F) und eine Einstrahlungsposition des Laserstrahls derart nach oben bewegt werden, dass sie entfernt sind von der Bodenfläche (51b; 52b; 61b) der Vertiefung (51; 52; 61) und das Grundmaterial um die Mittellinie (S) der Vertiefung (51; 52; 61) gedreht wird, um den Auftragabschnitt (W) auszubilden.

12. Auftragschweißverfahren zum Durchführen von Auftragschweißen auf einer Oberfläche eines Grundmaterials (50), die zu belegen ist, wobei das Verfahren aufweist:
einen Vorbereitungsschritt des Ausbildens einer Vertiefung mit einem Boden (51; 52; 61), wobei die zu belegende Oberfläche eine Umfangsfläche (51a; 52a; 61b) davon ist; und
einen Auftragschritt bei dem ein Füllmaterial (F) zu der Bodenfläche (51b, 52b; 61b) der Vertiefung (51; 52; 61) hin zugeführt wird und ein Laserstrahl als eine Wärmequelle auf die Bodenfläche (51b; 52b; 61) der Vertiefung (51; 52; 61) zu der das Füllmaterial (F) zugeführt wird, eingestrahlt wird, wodurch ein Auftragabschnitt (W) ausgebildet wird, der die zu belegende Oberfläche erreicht, während die Bodenfläche (51b; 52b; 61b) der Vertiefung (51; 52; 61) mit dem geschmolzenen Füllmaterial (F) gefüllt wird, wobei bei dem Vorbereitungsschritt eine ringförmige Nut mit Boden ausgebildet in dem Grundmaterial (50) selbst als die Vertiefung (51; 52; 61) vorgesehen wird, wobei eine äußere Umfangsfläche (51a; 52a; 61a) davon die zu belegende Oberfläche ist,
**gekennzeichnet durch** einen Bearbeitungsschritt bei dem nach dem Auftragschritt die innere Umfangsseite der ringförmigen Nut geschnitten wird, um eine Durchgangsöffnung (53; 54; 63; 64) welche das Grundmaterial (50) durchdringt, auszubilden.

13. Auftragschweißverfahren nach Anspruch 12, wobei
eine Umfangsfläche (51a; 52a; 61a) auf der inneren Umfangsseite der Vertiefung (51; 52; 61) ausgebildet aus der ringförmigen Nut eine konische Fläche (61d) mit einer Nutbreite ist, die sich graduell zu einer Bodenfläche (51b; 52b; 61b) hin verengt.

## Revendications

1. Procédé de soudage à recouvrement pour la réalisation d'un soudage à recouvrement sur une surface à recouvrir d'un matériau de base (50), le procédé comprenant :
une étape de préparation pour former une dépression à fond (51 ; 52 ; 61), la surface à recouvrir étant une surface circonférentielle (51a ; 52a ; 61a) de celle-ci ; et
une étape de recouvrement , dans laquelle un matériau d'apport (F) est acheminé vers la face inférieure (51b ; 52b ; 61b) de la dépression (51 ; 52 ; 61), et un faisceau laser en tant que source de chaleur est irradié sur la face inférieure (51b ; 52b ; 61b) de la dépression (51 ; 52 ; 61), à laquelle le matériau d'apport (F) est acheminé, formant ainsi une partie recouverte (W) atteignant la surface à recouvrir tout en remplissant la face inférieure (51b ; 52b ; 61b) de la dépression (51 ; 52 ; 61) avec le matériau d'apport fondu (F),
**caractérisé par** une étape d'usinage dans laquelle un trou traversant (53, 54 ; 63, 64) est formé dans le matériau de base (50) le long d'une ligne centrale (S) de la dépression (51, 52 ; 61) après l'étape de recouvrement .

2. Procédé de soudage à recouvrement selon la revendication 1, dans lequel une nouvelle partie recouverte (W) est en outre appliquée sur la partie recouverte formée (W) lors de l'étape de recouvrement

3. Procédé de soudage à recouvrement selon la revendication 1 ou 2, dans lequel le matériau d'apport (F) est chauffé et fourni lors de l'étape de recouvrement .

4. Procédé de soudage à recouvrement selon l'une quelconque des revendications 1 à 3, dans lequel, lors de l'étape de recouvrement , le matériau de base (50) est préchauffé avant la formation de la partie recouverte (W) et le matériau de base (50) est post-chauffé après la formation de la partie recouverte (W).

5. Procédé de soudage à recouvrement selon l'une quelconque des revendications 1 à 4, dans lequel, lors de l'étape de recouvrement, l'acheminement du matériau d'apport (F) et l'irradiation d'un faisceau laser pour la fusion du matériau d'apport (F) sont réalisés plusieurs fois.

6. Procédé de soudage à recouvrement selon l'une quelconque des revendications 1 à 5, dans lequel, lors de l'étape de préparation, un coin (51c ; 52c ; 61c) reliant la surface circonférentielle (51a ; 52a ; 61a) de la dépression (51 ; 52 ; 61) et la face inférieure (51b ; 52b ; 61b) de la dépression (51 ; 52 ; 61) est formé en arc circulaire.

7. Procédé de soudage à recouvrement selon l'une quelconque des revendications 1 à 6, dans lequel, lors de l'étape de préparation, la face inférieure (51b ; 52b ; 61b) de la dépression (51 ; 52 ; 61) est conformée en forme plate ou concave présentant un grand angle d'ouverture.

8. Procédé de soudage à recouvrement selon l'une quelconque des revendications 1 à 7, comprenant :
une étape de re-préparation pour former une nouvelle dépression (51 ; 52 ; 61) atteignant la face inférieure (51b ; 52b ; 61b) de la dépression (51 ; 52 ; 61) dans le matériau de base (50) après l'étape de recouvrement ; et
une étape de re-recounvrement pour réaliser le soudage par recouvrement sur la nouvelle dépression (51 ; 52 ; 61) de manière similaire à l'étape de recouvrement .

9. Procédé de soudage à recouvrement selon la revendication 8, dans lequel l'étape de recouvrement est une étape de re-recouvrement .

10. Procédé de soudage à recouvrement selon l'une quelconque des revendications 1 à 7, dans lequel, lors de l'étape de préparation, la face inférieure (51b ; 52b ; 61b) de la dépression (51 ; 52 ; 61) est formée par blocage d'une ouverture du trou traversant (53, 54 ; 63 ; 64) par un élément de blocage (55) formé d'un même matériau que le matériau d'apport (F) ou d'un même matériau que le matériau de base (50) tout en désignant une surface circonférentielle (51a ; 52a ; 61a) du trou traversant (53, 54 ; 63 ; 64) formée dans le matériau de base (50) lui-même comme la surface à recouvrir .

11. Procédé de soudage à recouvrement selon l'une quelconque des revendications 1 à 10, dans lequel, lors de l'étape de recouvrement , l'acheminement du matériau d'apport (F) et l'irradiation du faisceau laser sont réalisés de sorte à être éloignés de la ligne centrale (S) de la dépression (51 ; 52 ; 61), la position d'acheminement du matériau d'apport (F) et la position d'irradiation du faisceau laser sont déplacées vers le haut de sorte à être éloignées de la face inférieure (51b ; 52b ; 61b) de la dépression (51 ; 52 ; 61), et le matériau de base (50) est soumis à une rotation autour de la ligne centrale (S) de la dépression (51 ; 52 ; 61) pour former la partie recouverte (W).

12. Procédé de soudage à recouvrement pour réaliser le soudage par recouvrement sur une surface à recouvrir d'un matériau de base (50), le procédé comprenant :
une étape de préparation pour former une dépression à fond (51 ; 52 ; 61), la surface à recouvrir étant une surface circonférentielle (51a ; 52a ; 61a) de celle-ci ; et
une étape de recouvrement , dans laquelle un matériau d'apport (F) est acheminé vers une face inférieure (51b ; 52b ; 61b) de la dépression (51 ; 52 ; 61) et un faisceau laser en tant que source de chaleur est irradié sur la face inférieure (51b ; 52b ; 61) de la dépression (51 ; 52 ; 61), à laquelle le matériau d'apport (F) est acheminé , formant ainsi une partie recouverte (W) atteignant la surface à recouvrir, tout en remplissant la face inférieure (51b ; 52b ; 61b) de la dépression (51 ; 52 ; 61) par le matériau d'apport fondu (F),
dans lequel, lors de l'étape de préparation, une rainure annulaire à fond formée dans le matériau de base (50) lui-même est désignée comme la dépression (51 ; 52 ; 61), une surface circonférentielle extérieure (51a ; 52a ; 61a) de celle-ci étant la surface à recouvrir ,
**caractérisé par** une étape d'usinage, dans laquelle, après l'étape de recouvrement , le côté périphérique intérieur de la rainure annulaire est coupé pour former un trou traversant (53 ; 54 ; 63 ; 64) pénétrant dans le matériau de base (50).

13. Procédé de soudage à recouvrement selon la revendication 12, dans lequel une surface circonférentielle (51a ; 52a ; 61a) sur un côté périphérique intérieur de la dépression (51 ; 52 ; 61) formée de la rainure annulaire est une surface amincie (61d) avec une largeur de rainure progressivement rétrécie vers une face inférieure (51a ; 52b ; 61b).
